# EUROPÄISCHE PATENTSCHRIFT

(11) **EP 4 442 102 B1**
(45) Veröffentlichungstag und Bekanntmachung des Hinweises auf die Patenterteilung: **25.02.2026**
(21) Anmeldenummer: 24162747.0
(22) Anmeldetag: 11.03.2024
(51) Int. Cl.: A01D 41/127, G06Q 50/02, A01B 79/00

(54) **VERFAHREN UND ANORDNUNG ZUR RECHNERGESTÜTZTEN AUFBEREITUNG EINER ELEKTRONISCHEN ERTRAGSKARTE**
METHOD AND ARRANGEMENT FOR THE COMPUTER-ASSISTED PROCESSING OF AN ELECTRONIC YIELD MAP
PROCÉDÉ ET DISPOSITIF DE TRAITEMENT ASSISTÉ PAR ORDINATEUR D'UNE CARTE DE RENDEMENT ÉLECTRONIQUE

(30) Priorität: 06.04.2023 DE 102023108956
(43) Veröffentlichungstag der Anmeldung: 09.10.2024
(73) Patentinhaber: Deere & Company, Moline, IL 61265 (US)
(72) Erfinder: BLANK, Sebastian, 68163 Mannheim (DE)
(74) Vertreter: Holst, Sönke

(56) Entgegenhaltungen:
- EP-A1- 3 772 269
- EP-B1- 1 180 925
- US-A1- 2016 084 987
- REITZ P ET AL: "INVESTIGATIONS ON A PARTICULAR YIELD MAPPING SYSTEM FOR COMBINE HARVESTERS", 1 February 1996, COMPUTERS AND ELECTRONICS IN AGRICULTURE, AMSTERDAM, NL, PAGE(S) 137 - 150, XP002059527
- THOMAS STEINMAYR: "Fehleranalyse und Fehlerkorrektur bei der lokalen Ertragsermittlung im M�hdrescher zur Ableitung eines standardisierten Algorithmus f�r die Ertragskartierung", 26 June 2002 (2002-06-26), pages 1 - 247, XP093156669, Retrieved from the Internet <URL:https://d-nb.info/966389735/34> [retrieved on 20240426]

## Beschreibung

Die Erfindung betrifft ein Verfahren und eine Anordnung zur rechnergestützten Aufbereitung einer elektronischen Ertragskarte, in welcher von einem oder mehreren, beim Abernten eines Felds in einer Erntemaschine mit Erntegut zusammenwirkenden Sensoren erzeugte Signale georeferenziert und mit zugehörigen Zeitangaben eingetragen sind.

### Stand der Technik

Landwirtschaftliche Erntemaschinen werden üblicherweise mit Mitteln zur Ertragskartierung ausgestattet. Diese umfassen einen Sensor zur Erfassung von Eigenschaften (insbesondere des Durchsatzes und/oder von Inhaltsstoffen wie z.B. dem Feuchtegehalt) des Ernteguts innerhalb der Erntemaschine und eine Positionsbestimmungseinrichtung, bei der es sich in der Regel um einen Empfänger von Signalen eines satellitenbasierten Navigationssystems (GNSS) handelt. Anhand der gemessenen Ernteguteigenschaften und der erfassten Position werden so genannte Ertragskarten erstellt, in denen ortspezifisch aufgezeichnet ist, an welcher Stelle eines Feldes Erntegut mit welchen Eigenschaften aufgenommen wurde. Diese Ertragskarten können zu präzisionslandwirtschaftlichen Zwecken, wie der Düngeplanung für die nächste Saison oder zu Abrechnungszwecken genutzt werden. Zudem können sie für eine vorausschauende Ansteuerung der Erntemaschine bei einem nachfolgenden Erntevorgang genutzt werden oder um selbstlernende Pflanzenwachstumsmodelle mit Lerndaten zu versorgen.

Aufgrund des Aufbaus der Erntemaschine liegt jedoch eine zeitliche Verzögerung zwischen dem Aufnehmen einer geernteten Pflanze von einem Ort, an dem sie wächst, und dem Zusammenwirken mit dem Sensor vor. So muss die Pflanze bzw. ihr Korn bei einem Mähdrescher erst durch den Erntevorsatz, den Schrägförderer, die Dresch- und Trenneinrichtung, die Reinigung und den Körnerelevator hindurch laufen, bis sie mit einem üblichen Prallplattensensor am Auslass des Körnerelevators zusammenwirkt. Diese Laufzeit liegt in der Größenordnung jenseits von 10 Sekunden. Ähnlich, wenn auch nicht ganz so lang, sind die Zeitverzögerungen bei Feldhäckslern, an denen die Ertragsmessung an den Vorpresswalzen oder im Auswurfkrümmer erfolgt. Analog werden aufgrund der Durchlaufzeiten des Ernteguts durch die Erntemaschine auch noch Erträge gemessen, wenn keine Pflanzen mehr geerntet werden, aber noch in der Erntemaschine verarbeitet werden. Ähnliche Probleme gibt es bei anderen Erntemaschinen, wie Baumwollpflückern und Zuckerrohrerntern, bei denen Ernte und Sensierung des Ernteguts räumlich und somit zeitlich voneinander beabstandet sind.

Im Stand der Technik wird diese Zeitverzögerung als konstant angenommen und bei der Auswertung der Messwerte berücksichtigt (EP 0 960 558 A1, EP 1 180 925 B1, P. Reitz et al., Investigations on a particular yield mapping sysem for combine harvesters, Computers and Electronics in Agriculture vom 1.2.1996, Seite 137 bis 150). Jüngere Ansätze nutzen hierfür, und zur Zuordnung der Erträge über die Breite des Erntevorsatzes, die Geschwindigkeit der Fördermittel des Ernteguts (EP 3 008 990 A2) oder vorausschauende Sensoren (EP 3 772 269 A1).

Eine weitere, im Stand der Technik genutzte Möglichkeit liegt darin, diese Zeitverzögerung erst bei einer Nachbearbeitung der Ertragskarten zu berücksichtigen, indem pauschal die Anfangs- und Endzeit der bei einer Überfahrt über das Feld gemessenen Erträge um vorbestimmte Zeiten nach vorn verlegt werden (J.L. Ping et al., Processing of Yield Map Data, Precision Agriculture 6 (2005), Seite 193 bis 212), oder diese Zeitverzögerungen aus den Ertragskurven abzuleiten, indem man anhand an- oder absteigender Signale die Bestandskanten identifiziert (S.O. Chung et al, Determining Yield Monitoring System Delay Time with Geostatistical and Data Segmentation Approaches, Transactions of the ASAE Vol. 45 (4), (2002), Seiten 915-926), oder die Ertragskarten mit Luftbildern abgleicht (R. Goncalves Trevisan et al, Improving yield mapping accuracy using remote sensing, am 5.4.2023 aufgerufen unter https://www.preprints.org/manuscript/201901.0287/v1).

In der Praxis hängt die Zeitverzögerung unter anderem von Feld- (Topografie) und Pflanzeneigenschaften (Reife, Korngröße, Durchsatz), Maschinenkonfiguration (Rotorzinken, Roste, Vorsatzart, d.h. Querförderung durch Schnecke oder Band) und Maschineneinstellungen (Fahrgeschwindigkeit, Rotordrehzahl, Einstellung von Kufen im Separator, resultierende Überkehr etc.) ab, von denen einige über die Zeit bzw. abhängig vom Ort variieren.

### Aufgabe

Die Zeitverzögerungen sind, insbesondere bei Mähdreschern, relativ hoch. Zudem hängen sie von verschiedenen Parametern ab, wie Ernteguteigenschaften (Feuchte) und dem jeweiligen Durchsatz, wie oben angemerkt. Eine pauschale Berücksichtigung führt somit zu Fehlern in den Ertragskarten. Eine Verwendung zusätzlicher Sensoren zur Messung der Durchlaufzeit oder eines Luftbildes erhöht den Aufwand und eine nachträgliche Bestimmung der Zeitverzögerungen anhand der Ertragskarten enthält immer noch Unsicherheiten zumindest in der Zuordnung der gemessenen Erträge zu den Orten, denn allein anhand der Kurvenform der Erträge kann allenfalls der ungefähre Zeitpunkt festgestellt werden, wann eine Bestandskante überquert wurde, mangels einer Information über die Lage der zugehörigen Bestandskante nicht aber der jeweilige Ort.

Die der Erfindung zu Grunde liegende Aufgabe wird darin gesehen, ein gegenüber dem Stand der Technik verbessertes Verfahren und eine Anordnung zur rechnergestützten Aufbereitung einer elektronischen Ertragskarte, in welcher von einem oder mehreren, beim Abernten eines Felds in einer Erntemaschine mit Erntegut zusammenwirkenden Sensoren erzeugte Signale georeferenziert und mit zugehörigen Zeitangaben eingetragen sind, bereitzustellen, welche die erwähnten Nachteile nicht oder zumindest in einem verminderten Maß aufweist.

### Lösung der Aufgabe

Diese Aufgabe wird erfindungsgemäß durch die Lehre der Patentansprüche 1 und 10 gelöst, wobei in den weiteren Patentansprüchen Merkmale aufgeführt sind, die die Lösung in vorteilhafter Weise weiterentwickeln.

Ein Verfahren und eine Anordnung zur rechnergestützten Aufbereitung einer elektronischen Ertragskarte, in welcher von einem oder mehreren, beim Abernten eines Felds in einer Erntemaschine mit Erntegut zusammenwirkenden Sensoren erzeugte Signale georeferenziert und mit zugehörigen Zeitangaben eingetragen sind, umfasst folgende Schritte bzw. eine Rechnereinrichtung, die zu ihrer Durchführung programmiert ist:
(a) Identifizieren der Lage von einem oder mehreren Vorgewenden oder einer anderen Stelle mit einer Bestandskante auf dem Feld anhand der Ertragskarte,
(b) Identifizieren der Lage von einer oder mehreren Bestandskanten, die das Vorgewende oder die andere Stelle von einem Teil des Felds trennen, auf dem die Erntemaschine wenigstens eine Spur zurückgelegt und Erntegut aufgenommen hat, anhand der Ertragskarte,
(c) Identifizieren des Zeitpunkts oder der Position des Beginns und/oder Endes des Überquerens der Bestandskante beim Abfahren der Spur anhand der Ertragskarte,
(d) Identifizieren des Zeitpunkts oder der Position des Beginns und/oder Endes der Erfassung des Aufnehmens von Erntegut durch die Sensoren beim Abfahren der Spur anhand der in der Ertragskarte eingetragenen Signale der Sensoren,
(e) Identifizieren einer Zeitverzögerung oder eines räumlichen Versatzes zwischen dem identifizierten Zeitpunkt oder der Position des Überquerens der Bestandskante und dem identifizierten Zeitpunkt oder der Position des Beginns und/oder Endes des Aufnehmens von Erntegut, und
(f) Korrigieren der Ertragskarte anhand der identifizierten Zeitverzögerung oder des räumlichen Versatzes.

Auf diese Weise werden, ohne dass zusätzliche Sensoren nötig wären, allein anhand der Ertragskarte und der darin eingetragenen, von der Erntemaschine zurückgelegten Spur und der zugehörigen Sensorsignale und Zeitangaben, die Zeitverzögerung zwischen der Aufnahme des Ernteguts und ihrer Sensierung erkannt und kompensiert. Hierzu wird die Lage der Bestandskante am Anfang und/oder Ende der Spur erkannt. Zudem wird anhand der Signale der Sensoren erkannt, wo entlang der Spur Erntegut erst- und/oder letztmals aufgenommen wurde. Anhand der zugehörigen Zeitpunkte wird die Zeitverzögerung oder der damit verbundene räumliche Versatz erkannt und die Ertragskarte entsprechend korrigiert.

Die Bestandskante liegt am Rande eines Vorgewendes oder einer anderen Stelle des Felds, an dem sich eine Bestandskante ergibt. Hierbei kann es sich beispielsweise um eine absichtlich mitten durch das Feld geschnittene Schneise handeln, die dazu dient, das Feld in Beete zu teilen oder das hier beschriebene Vorgehen auf weitere Stellen als das Vorgewende zu erweitern, oder es ist eine Stelle, an der aus anderen Gründen kein Erntegut vorhanden ist, z.B. weil dort keines angebaut wurde oder aus topografischen Gründen (Wasserlauf o.ä.) kein Erntegut wachsen kann. Bei der Schneise kann die entsprechende Stelle und die Bestandskante anhand des von der Erntemaschine bei der Ernte zurückgelegten Wegs (nämlich zum Erstellen der Schneise) erkannt werden, während eine nicht mit Erntegut besetzte Stelle anhand des Wegs der Erntemaschine und/oder der zugehörigen Erträge erkannt werden kann.

Die Erntemaschine kann ein Mähdrescher oder eine beliebige andere Erntemaschine sein, in der Erntegut aufgenommen wird, z.B. ein Feldhäcksler oder eine Ballenpresse.

Die durch die Laufzeit des Ernteguts zwischen der Aufnahme durch einen Erntevorsatz und dem Erreichen des Sensors bedingte Zeitverzögerung führt zu einer Verfälschung der Ertragskarte, da die Signale der Sensoren erst verspätet erfasst und in die Ertragskarte eingetragen werden. Diese Verfälschung der Ertragskarte wird im Schritt (f) derart ausgeglichen, dass die erzeugte Ertragskarte die Sensorwerte für die jeweilige Stelle enthält, an der die jeweilige Pflanze bzw. deren Erntegutbestandteile durch die Erntemaschine aufgenommen wurde, die mit dem Sensor zusammenwirkt.

Die Zeitverzögerung oder der räumliche Versatz kann pauschal für das gesamte Feld oder separat für jede Spur oder jeweils für einen Teil der Spuren bestimmt werden.

Im Schritt (d) kann der Beginn und/oder das Ende des Aufnehmens des Ernteguts anhand einer Änderung der Signale des Sensors erkannt werden, insbesondere daran, dass die Signale des Sensors eine bestimmte Grenze über- oder unterschreiten.

Der Sensor kann den Durchsatz und/oder die Feuchtigkeit und/oder andere Inhaltsstoffe des Ernteguts erfassen.

Das besagte Verfahren kann während des Erntevorgangs oder danach durchgeführt werden, insbesondere durch eine Rechnereinrichtung der Erntemaschine oder eine davon beabstandete Rechnereinrichtung, an welche die Ertragskarte drahtlos oder mittels eines Datenträgers übergeben wird.

### Ausführungsbeispiel

In den Zeichnungen ist ein nachfolgend näher beschriebenes Ausführungsbeispiel der Erfindung dargestellt. Es zeigt:
Figur 1 einen Mähdrescher mit einer Messeinrichtung zur Durchsatzerfassung,
Figur 2 eine Darstellung eines Feldes bei der Ernte, und
Figur 3 ein Flussdiagramm zur Erzeugung einer Ertragskarte.

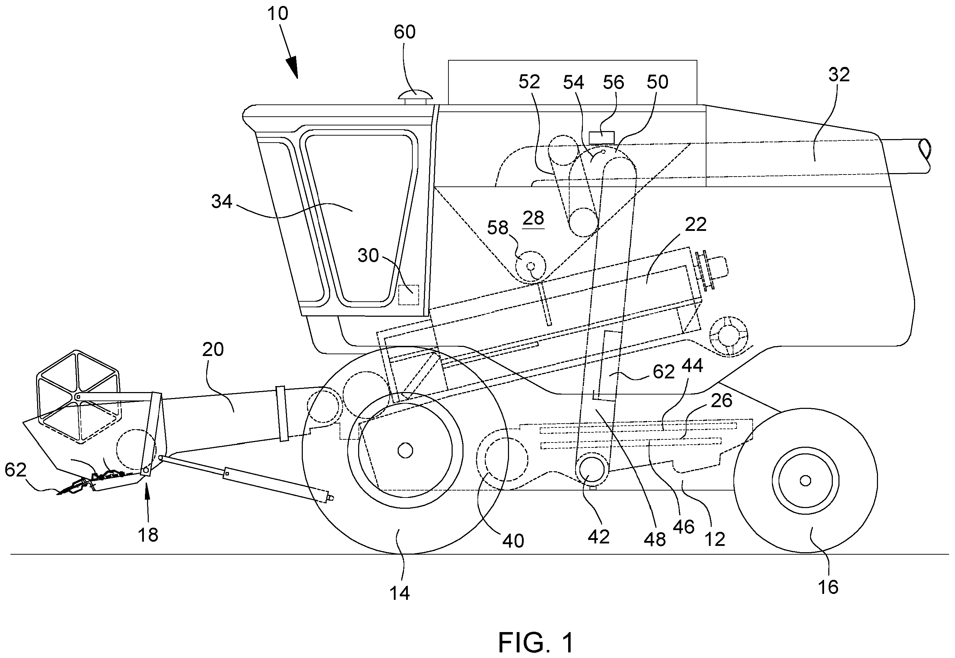

Die Figur 1 zeigt eine selbstfahrende Erntemaschine in Form eines Mähdreschers 10 mit einem Fahrgestell 12, das sich über angetriebene vordere Räder 14 und lenkbare rückwärtige Räder 16 auf dem Boden abstützt und von diesen fortbewegt wird. Die Räder 14, 16 werden mittels nicht gezeigter Antriebsmittel in Drehung versetzt, um den Mähdrescher 10 z. B. über ein abzuerntendes Feld zu bewegen. Im Folgenden beziehen sich Richtungsangaben, wie vorn und hinten, auf die Fahrtrichtung V des Mähdreschers 10 im Erntebetrieb, die in der Figur 1 nach links verläuft.

An den vorderen Endbereich des Mähdreschers 10 ist ein Erntevorsatz 18 in Form eines Schneidwerks abnehmbar angeschlossen, um beim Erntebetrieb Erntegut in Form von Getreide oder andere, dreschbare Halmfrüchte von dem Feld zu ernten und es nach oben und hinten durch einen Schrägfördererzusammenbau 20 einem Axialdreschwerk 22 zuzuführen. Das im Axialdreschwerk 22 durch Dreschkörbe und Roste hindurchtretende, Körner und Verunreinigungen enthaltende Gemisch gelangt in eine Reinigungseinrichtung 26. Durch die Reinigungseinrichtung 26 gereinigtes Getreide wird mittels einer Körnerschnecke 42 einem Körnerelevator 48 und von diesem durch ein Übergangsgehäuse 50 einer Befüllschnecke 52 zugeführt, der es in einen Korntank 28 befördert. Das gereinigte Getreide aus dem Korntank 28 kann durch ein Entladesystem mit einer Querschnecke 30 und einem Entladeförderer 32 entladen werden. Die genannten Systeme werden mittels eines Verbrennungsmotors angetrieben und von einem Bediener aus einer Fahrerkabine 34 heraus kontrolliert und gesteuert. Das Axialdreschwerk 22 ist nur ein Ausführungsbeispiel und könnte durch eine Tangentialdreschtrommel mit nachfolgendem Strohschüttler oder Axialtrenneinrichtungen ersetzt werden.

Die Reinigungseinrichtung 26 umfasst in an sich bekannter Weise ein oberes Sieb 44 und ein unteres Sieb 46, die durch ein Gebläse 40 mit einem die Siebe nach hinten und oben durchströmenden Luftstrom beaufschlagt werden. Die Größe der Sieböffnungen und die Drehzahl des Gebläses 40 kann in an sich bekannter Art durch eine selbsttätige Reinigungseinstellung oder durch den Bediener aus der Fahrerkabine 34 verändert werden. Das vom oberen Sieb 44 am hinteren Ende abgegebene Gemisch wird durch einen Spreuverteiler oder einen Strohhäcksler auf dem Feld verteilt und das vom unteren Sieb am hinteren Ende abgegebene Gemisch wird durch einem Überkehrförderer einem weiteren Dreschvorgang zugeführt, sei es durch einen separaten Nachdrescher oder das Axialdreschwerk 22.

Das vom Körnerelevator 48 abgegebene Korn prallt gegen eine Prallplatte 54, die an ihrem stromauf liegenden Ende um eine quer zur Vorwärtsrichtung schwenkbare Achse gegen eine definierte (Feder-) Kraft schwenkbar angelenkt ist und deren jeweilige Position durch einen zur Durchsatzerfassung dienenden Sensor 56 erfasst wird. Die Position des Mähdreschers 10 wird durch eine Positionsbestimmungseinrichtung 60 bestimmt, die Signale von Satelliten eines globalen Navigationssystems (GNSS, wie GPS, Galileo etc.) empfängt und darauf basierend die aktuelle Position des Mähdreschers 10 berechnet, ggf. unter Verwendung von lokalen Korrektursignalen (DGPS bzw. RTK). Dem Körnerelevator 48 ist zudem eine Feuchtigkeitssensor 62 zur Erfassung der Feuchtigkeit des Korns zugeordnet, der in einem Bypass oder direkt im Körnerelevator 48 angeordnet sein kann.

Eine Rechnereinrichtung 58 speichert im Erntebetrieb die von der Positionsbestimmungseinrichtung 60 erfasste Position gemeinsam mit den zugehörigen (Uhr-) Zeiten, die von der Positionsbestimmungseinrichtung 60 bereitgestellt werden und den zugehörigen Signalen des Sensors 56 und des Feuchtigkeitssensors 62 (georeferenziert) ab. Der Feuchtigkeitssensor 62 könnte auch durch einen anderen (NIR-) Sensor zur Erfassung beliebiger Inhaltsstoffe ersetzt oder ergänzt werden. Die Sensoren 56 und 62 können sich auch an beliebigen anderen Stellen des Mähdreschers 10 befinden, um den Durchsatz und/oder Inhaltsstoffe des Ernteguts zu erfassen und auf beliebigen Messprinzipien beruhen. Die Signale der Positionsbestimmungseinrichtung 60 können auch zum selbsttätigen Lenken des Mähdreschers 10 dienen.

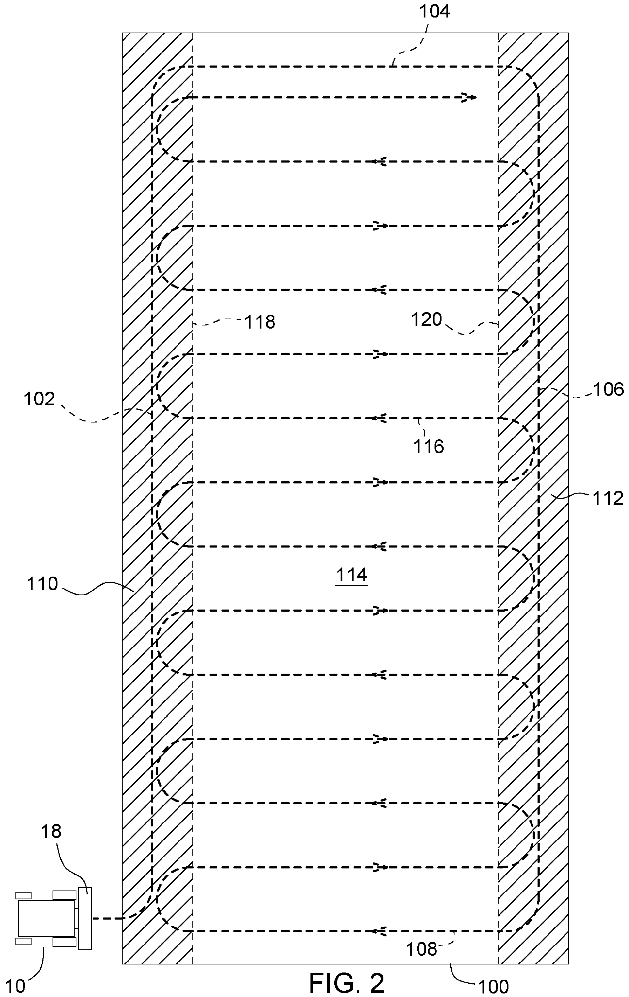

Die Figur 2 zeigt eine schematische Darstellung eines Felds 100 bei der Ernte. Der Mähdrescher 10 fährt zuerst um den äußeren Umfang des Feldes herum und legt dabei die Wege 102, 104, 106 und 108 zurück. Die beim Befahren der Wege 102 und 106 abgeernteten Flächen 110, 112 dienen beim Abernten des mittleren Teils 114 des Felds 100 als so genannte Vorgewende, auf denen der Mähdrescher 10 wendet, wenn er nach und nach einzelne Spuren 116 auf dem Feld 100 abfährt und aberntet. Anders als gezeigt, können anfangs mehr Wege als die gezeigten Wege 102 bis 108 zurückgelegt werden, um Vorgewende 110, 112 zu erzeugen, deren Breite dem zwei, drei oder mehrfachen der Breite des Erntevorsatzes 18 entsprechen. Zudem würden üblicherweise die Spuren 116 parallel zur längeren Seite des Felds 100 gelegt werden, um die Zahl der unproduktiven Wendevorgänge zu vermindern. Auch müssen direkt nacheinander abgefahrene Spuren 116 nicht unmittelbar nebeneinander liegen, sondern es können jeweils Spuren 116 ausgelassen und später abgeerntet werden, was die Wendevorgänge vereinfacht.

Die von der Rechnereinrichtung 58 gespeicherten, georeferenzierten Signale der Sensoren 56 und 62 enthalten Daten für den Durchsatz (Sensor 56) und die Feuchtigkeit und/oder andere Inhaltsstoffe des Ernteguts (Sensor 62), die zeitlich und räumlich nicht direkt mit dem Ort korrelieren, an dem das jeweilige Erntegut aufgenommen wurde. Das liegt an der Laufzeit des Ernteguts zwischen dem Abschneiden durch den Messerbalken 62 des Erntevorsatzes 18 durch den Erntevorsatz 18, den Schrägförderer 20, das Axialdreschwerk 22, die Reinigungseinrichtung 26, die Körnerschnecke 42 und den Körnerelevator 48, bis es die Sensoren 56, 62 erreicht. Diese Laufzeit kann von einer Vielzahl von Faktoren abhängen und sich laufend ändern. Eine ähnliche Zeitverzögerung ergibt sich beim Ausfahren aus dem Bestand. Zudem ist die Positionsbestimmungseinrichtung 60 vom Messerbalken 62 räumlich getrennt, was jedoch durch Umrechnen der Position relativ einfach korrigiert werden kann (vgl. EP 0845 198 A1 und EP 0 970 595 A1).

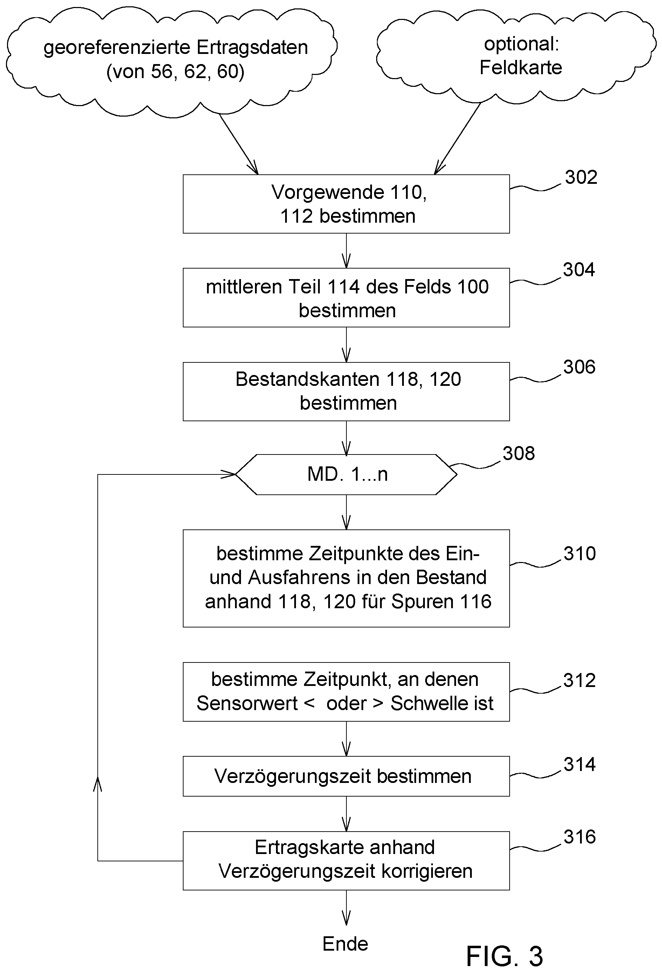

Um das besagte Problem der Zeitverzögerungen zu lösen oder zumindest zu vermindern, geht die Rechnereinrichtung 58 oder ein beliebiger, anderer, insbesondere vom Mähdrescher 10 beabstandeter Rechner, an den die georeferenzierten Ertragsdaten drahtlos oder mittels eines Datenträgers übersandt werden, gemäß dem Flussdiagramm der Figur 3 vor. Als Eingangswerte für das Verfahren dienen die georeferenzierten Daten von den Sensoren 56 und/oder 62, die gemeinsam mit den zugehörigen, durch die Positionsbestimmungseinrichtung 60 erfassten Positionsdaten mit zugehörigen Zeitangaben als Eingangswerte dienen. Der Rechnereinrichtung 58 kann optional eine Karte des Felds zugeführt werden, in welcher die Grenzen des Felds 100 als Polygonzug oder in beliebiger Datenform zugeführt werden.

In einem ersten Schritt 302 wird die Lage des Vorgewendes 110, 112 bestimmt. Anhand der beim Abernten des Felds gefahrenen Spuren 102 bis 108 und 116 sowie der bekannten Breite des Erntevorsatzes 18 kann die Rechnereinrichtung 58 erkennen, welche der Fahrspuren anfangs abgefahren und abgeerntet wurden und später als Vorgewende 110, 112, d.h. zum Wenden, genutzt wurden. Hierbei kann die Karte des Felds 100 zur Definition einer äußeren Grenze des Felds 100 dienen, innerhalb welcher das Vorgewende 110, 112 liegen sollte.

Im folgenden Schritt 304 werden die Grenzen des Felds 100 abzüglich des Vorgewendes 110, 112, d.h. die Umrandungskoordinaten des mittleren Teils 114 des Feldes 100, auf dem der Erntegutbestand auf den Spuren 116 abgefahren wird, bestimmt. Dazu wird von den (anhand der Karte oder der zurückgelegten Spuren 102 bis 108) bekannten Grenzen des Felds 100 das Vorgewende 110, 112 abgezogen, sodass der mittlere Teil 114 übrigbleibt.

Im folgenden Schritt 306 werden anhand der Lage des mittleren Teils 114 die Lagen der Bestandskanten 118, 120 bestimmt, an denen der Mähdrescher 10 beim Befahren der Spuren 116 auf dem mittleren Teil 114 jeweils in den dann noch stehenden Erntegutbestand hineinfährt oder hinausfährt. Die Bestandskanten 118, 120 verlaufen in der Regel (je nach Form des Felds 100) quer zur Breite des Erntevorsatzes 118.

Der folgende Schritt 308 repräsentiert mögliche Wiederholungen der nächsten Schritte 310 bis 316 für einen oder mehrere weitere Mähdrescher, die möglicherweise gemeinsam mit dem Mähdrescher 10 der Figuren 1 und 2 das Feld 100 abgearbeitet haben. Die folgenden Schritte 310 bis 316 werden demnach ggf. für die weiteren Mähdrescher entsprechend wiederholt.

Im folgenden Schritt 310 werden anhand der bekannten Lagen der Bestandskanten 118, 120 die Zeitpunkte bestimmt, an denen der Mähdrescher 10 auf den einzelnen Spuren 116 in den Bestand im mittleren Teil 114 des Felds 100 hinein und hinaus gefahren ist. Es ist nach dem Schritt 310 somit für jede der Spuren 116 bekannt, zu welchen Zeiten der Messerbalken 62 des Erntevorsatzes 18 damit begonnen und aufgehört hat, Erntegut abzuschneiden und der Erntevorsatz 18 das Erntegut gefördert hat.

Im nächsten Schritt 312 werden für jede der Spuren 116 die Signale der Sensoren 56 und/oder 62 analysiert, um festzustellen, zu welchem Zeitpunkt beim Einfahren in den Bestand im mittleren Teil 114 des Felds 100 das Signal erstmals einen vorbestimmten Schwellenwert überschreitet, d.h. beim Einfahren in die Spur 116 an der Bestandskante 118 oder 120 erstmals Erntegut erfasst wird, und zu welchem Zeitpunkt beim Ausfahren dem Bestand im mittleren Teil 114 des Felds 100 das Signal letztmals einen vorbestimmten Schwellenwert unterschreitet, d.h. beim Ausfahren aus der Spur 116 letztmals Erntegut erfasst wird. An dieser Stelle können auch beliebige Algorithmen zur Erkennung verwendet werden, die anhand des zeitlichen Verlaufs der Signale der Sensoren 56 und/oder 62 erkennen, dass entlang einer Spur 116 erstmals oder letztmals Erntegut aufgenommen wurde, wie beispielsweise durch Anpassen an eine sigmoidale Funktion (s. M.W. Veal, Enhanced Grain Crop Yield Monitor Accuracy through Sensor Fusion and Post-Processing Algorithms, 2006, University of Kentucky Doctoral Dissertations, 249 (https://uknowledge.uky.edu/gradschool diss/249), dort Seite 51ff).

Die Ergebnisse der Schritte 310 und 312 ermöglichen es, im Schritt 314 die Zeitverzögerung (in der Literatur auch als Verzögerungszeit bezeichnet) zwischen dem Abschneiden des Ernteguts durch den Messerbalken 62 und dem Erfassen durch die Sensoren 56 und/oder 62 zu bestimmen, indem man sie untereinander vergleicht.

Im Schritt 316 wird die im Schritt 314 bestimmte Zeitverzögerung zur Korrektur der Ertragskarte genutzt. Wenn sich beispielsweise im Schritt 314 eine bestimmte Zeitverzögerung delta t beim Einund Ausfahren ergibt, müssen alle Sensorwerte um diese Zeitverzögerung delta t nach vorn verlegt werden. Anhand der bekannten Positionen und Zeiten ist das problemlos möglich, und man erhält auf diese Weise Ertragskarten, in denen die Zeitverzögerung selbsttätig und korrekt kompensiert wird.

In den Schritten 314 und 316 bestehen unterschiedliche Möglichkeiten, die Zeitverzögerungen, die auf den einzelnen Spuren 116 durchaus unterschiedlich sein können, zu berücksichtigen. Eine erste Möglichkeit liegt darin, eine einzige, durchschnittliche Zeitverzögerung für das ganze Feld 100 zu bestimmen. Dieses Vorgehen kann sinnvoll sein, wenn keine signifikante Änderung von Einstellungen des Mähdreschers 10 und seiner Fahrgeschwindigkeit und der Eigenschaften des Ernteguts (Ertrag, Feuchtigkeit) über das Feld vorliegt. Eine zweite Möglichkeit liegt darin, die Zeitverzögerungen für jede der Spuren 116 separat zu berücksichtigen, was bei signifikanten Änderungen der Geschwindigkeit und/oder von Einstellungen des Mähdreschers 10 und/oder der Eigenschaften des Ernteguts (Ertrag, Feuchtigkeit) über das Feld 100 sinnvoll sein kann. Eine dritte Möglichkeit wäre ein statistisches Vorgehen, d.h. man identifiziert im Schritt 314 jene Zeitverzögerungen, die auf dem gesamten Feld 100 oder in Teilbereichen davon am häufigsten auftreten und verwendet diese bzw. deren Mittelwert im Schritt 316 für das gesamte Feld 100, oder für die jeweiligen Teilbereiche mit ähnlichen Zeitverzögerungen die zugehörigen Zeitverzögerungen.

Falls das Feld 100 durch mehrere Mähdrescher 10 abgeerntet wurde, können die Schritte 308 bis 316 für die anderen Mähdrescher wiederholt werden. Die Ertragskarten sämtlicher Mähdrescher können anschließend, ggf. nach Korrektur- oder Kalibriermaßnahmen, zu einer einzigen Ertragskarte kombiniert werden.

Die Schritte der Figur 3 können auch schon während des Erntevorgangs durch die Rechnereinrichtung 58 oder den beabstandeten, oben erwähnten Rechner durchgeführt werden. Die Korrektur der Ertragskarte kann demnach schon während ihres Erzeugens, d.h. beim oder zumindest nach dem Befahren jeder Spur 116, erfolgen. Die Ertragskarte kann dem Bediener des Mähdreschers 10 auf einer geeigneten Bedienerschnittstelle angezeigt und in der Rechnereinrichtung 58 oder einem beliebigen Speicher (Cloud etc.) für spätere Zwecke abgelegt werden, und beispielsweise für eine vorausschauende Ansteuerung eines Mähdreschers 10 bei einem späteren Erntevorgang, zur Düngeplanung oder als Datenbasis für selbstlernende Pflanzenwachstumsmodelle verwendet werden.

Letztlich sei noch angemerkt, dass man theoretisch auch die Orte der Bestandskanten 118, 120 und die Orte vergleichen könnte, an denen gemäß der Signale der Sensoren 56, 62 beim Abfahren einer Spur 116 erst- oder letztmals Erntegut aufgenommen wurde, und einfach die den Signalen der Sensoren 56, 62 zugehörigen Orte um den sich dabei ergebenden örtlichen Versatz zurückverlegen könnte. Das hätte jedoch den Nachteil, dass bei eventuellen Geschwindigkeitsänderungen des Mähdreschers 10 Fehler in der Ertragskarte entstehen würden. Bei dieser Vorgehensweise erübrigen sich die Zeitangaben, sodass diese nicht unbedingt mit der Ertragskarte abgespeichert werden müssen.

## Patentansprüche

1. Verfahren zur rechnergestützten Aufbereitung einer elektronischen Ertragskarte, in welcher von einem oder mehreren, beim Abernten eines Felds (100) in einer Erntemaschine mit Erntegut zusammenwirkenden Sensoren (56, 62) erzeugte Signale georeferenziert und mit zugehörigen Zeitangaben eingetragen sind, mit folgenden Schritten:
(a) Identifizieren der Lage von einem oder mehreren Vorgewenden (110, 112) oder einer anderen Stelle mit einer Bestandskante auf dem Feld (100) anhand der Ertragskarte,
(b) Identifizieren der Lage von einer oder mehreren Bestandskanten (118, 120), die das Vorgewende (110, 112) oder die andere Stelle des Felds von einem Teil (114) des Felds (100) trennen, auf dem die Erntemaschine wenigstens eine Spur (116) zurückgelegt und Erntegut aufgenommen hat, anhand der Ertragskarte,
(c) Identifizieren des Zeitpunkts oder der Position des Überquerens der Bestandskante (118, 120) beim Abfahren der Spur (116) anhand der Ertragskarte,
(d) Identifizieren des Zeitpunkts oder der Position des Beginns und/oder Endes der Erfassung des Aufnehmens von Erntegut beim Abfahren der Spur (116) durch die Sensoren (56, 62) anhand der in der Ertragskarte eingetragenen Signale der Sensoren (56, 62),
(e) Identifizieren einer Zeitverzögerung oder eines räumlichen Versatzes zwischen dem identifizierten Zeitpunkt oder der Position des Überquerens der Bestandskante (118, 120) und dem identifizierten Zeitpunkt oder der Position des Beginns und/oder Endes des Aufnehmens von Erntegut, und
(f) Korrigieren der Ertragskarte anhand der identifizierten Zeitverzögerung oder des räumlichen Versatzes.

2. Verfahren nach Anspruch 1, wobei die Erntemaschine ein Mähdrescher (10) ist.

3. Verfahren nach Anspruch 1 oder 2, wobei die Zeitverzögerung durch die Laufzeit des Ernteguts zwischen der Aufnahme durch einen Erntevorsatz (18) und dem Erreichen des Sensors (56, 62) bedingt ist und im Schritt (f) die durch diese Zeitverzögerung bedingte Verfälschung der Ertragskarte ausgeglichen wird, sodass die im Schritt (f) erzeugte Ertragskarte die Sensorwerte für die jeweilige Stelle enthält, an der die jeweilige Pflanze durch die Erntemaschine aufgenommen wurde, die mit dem Sensor (56, 62) zusammenwirkt.

4. Verfahren nach einem der Ansprüche 1 bis 3, wobei die Zeitverzögerung oder der räumliche Versatz pauschal für das gesamte Feld (100) oder separat für jede Spur (116) oder jeweils für einen Teil der Spuren (116) bestimmt wird.

5. Verfahren nach einem der Ansprüche 1 bis 4, wobei im Schritt (d) der Beginn und/oder das Ende des Aufnehmens des Ernteguts anhand einer Änderung der Signale des Sensors (56, 62) erkannt wird.

6. Verfahren nach Anspruch 5, wobei im Schritt (d) der Beginn und/oder das Ende des Aufnehmens des Ernteguts anhand eines Über- oder Unterschreitens einer Grenze durch die Signale des Sensors (56, 62) erkannt wird.

7. Verfahren nach einem der vorhergehenden Ansprüche, wobei der Sensor (56, 62) den Durchsatz und/oder die Feuchtigkeit und/oder andere Inhaltsstoffe des Ernteguts sensiert.

8. Verfahren nach einem der vorhergehenden Ansprüche, wobei es während des Erntevorgangs oder danach durchgeführt wird.

9. Verfahren nach einem der vorhergehenden Ansprüche, wobei es durch eine Rechnereinrichtung (58) der Erntemaschine oder eine davon beabstandete Rechnereinrichtung durchgeführt wird.

10. Anordnung zur rechnergestützten Aufbereitung einer elektronischen Ertragskarte, in welcher von einem oder mehreren, beim Abernten eines Felds (100) in einer Erntemaschine mit Erntegut zusammenwirkenden Sensoren (56, 62) erzeugte Signale georeferenziert und mit zugehörigen Zeitangaben eingetragen sind, mit einer Rechnereinrichtung (58), die zur Durchführung eines Verfahrens nach einem der vorhergehenden Ansprüche konfiguriert ist.

## Claims

1. Method for the computer-aided preparation of an electronic yield map, in which signals that are generated by one or more sensors (56, 62), which interact with crop in a harvesting machine during the harvesting of a field (100), are georeferenced and plotted with associated time data, having the following steps:
(a) identifying the location of one or more headlands (110, 112) or a different place with a crop edge on the field (100) on the basis of the yield map,
(b) identifying the location of one or more crop edges (118, 120), which separate the headland (110, 112) or the different place in the field from a part (114) of the field (100) on which the harvesting machine has travelled on at least one track (116) and picked up crop, on the basis of the yield map,
(c) identifying the time or the position of the crossing of the crop edge (118, 120) when driving down the track (116) on the basis of the yield map,
(d) identifying the time or the position of the start and/or end of the capture of the picking up of crop when driving down the track (116) by the sensors (56, 62) on the basis of the signals of the sensors (56, 62) plotted in the yield map,
(e) identifying a time delay or a spatial offset between the identified time or the position of the crossing of the crop edge (118, 120) and the identified time or the position of the start and/or end of the picking up of crop, and
(f) correcting the yield map on the basis of the identified time delay or the spatial offset.

2. Method according to Claim 1, wherein the harvesting machine is a combine harvester (10).

3. Method according to Claim 1 or 2, wherein the time delay is caused by the running time of the crop between the picking up by a harvesting header (18) and reaching the sensor (56, 62) and the corruption of the yield map caused by this time delay is compensated in step (f), so the yield map generated in step (f) contains the sensor values for the respective place at which the respective plant was picked up by the harvesting machine which interacts with the sensor (56, 62).

4. Method according to one of Claims 1 to 3, wherein the time delay or the spatial offset is determined as a whole for the entire field (100) or separately for each track (116) or in each case for a part of the tracks (116).

5. Method according to one of Claims 1 to 4, wherein, in step (d), the start and/or the end of the picking up of the crop is detected on the basis of a change in the signals of the sensor (56, 62).

6. Method according to Claim 5, wherein, in step (d), the start and/or the end of the picking up of the crop is detected on the basis of the signals of the sensor (56, 62) exceeding or falling below a limit.

7. Method according to one of the preceding claims, wherein the sensor (56, 62) senses the throughput and/or the moisture and/or other contents of the crop.

8. Method according to one of the preceding claims, wherein it is carried out during the harvesting process or thereafter.

9. Method according to one of the preceding claims, wherein it is carried out by means of a computer device (58) of the harvesting machine or a computer device that is remote therefrom.

10. Arrangement for the computer-aided preparation of an electronic yield map, in which signals that are generated by one or more sensors (56, 62), which interact with crop in a harvesting machine during the harvesting of a field (100), are georeferenced and plotted with associated time data, having a computer device (58) that is configured for carrying out a method according to one of the preceding claims.

## Revendications

1. Procédé de préparation assisté par ordinateur d'une carte de rendement électronique, dans laquelle les signaux générés par un ou plusieurs capteurs (56, 62) coopérant avec le produit récolté dans une moissonneuse lors de la moisson d'un champ (100) sont géoréférencés et enregistrés avec les indications de temps correspondantes, comprenant les étapes suivantes :
(a) identification de la position d'une ou plusieurs tournières (110, 112) ou d'un autre endroit comportant un bord de récolte sur le champ (100) à l'aide de la carte de rendement,
(b) identification de la position d'un ou de plusieurs bords de récolte (118, 120) qui séparent la tournière (110, 112) ou l'autre endroit du champ d'une partie (114) du champ (100) sur laquelle la moissonneuse a parcouru au moins une trace (116) et a ramassé du produit récolté, à l'aide de la carte de rendement,
(c) identification du moment ou de la position du franchissement du bord de récolte (118, 120) lors de la sortie de la trace (116) à l'aide de la carte de rendement,
(d) identification du moment ou de la position du début et/ou de la fin de l'acquisition du ramassage du produit récolté lors de la sortie de la trace (116) par les capteurs (56, 62) à l'aide des signaux des capteurs (56, 62) enregistrés dans la carte de rendement,
(e) identification d'un retard ou d'un décalage dans l'espace entre le moment ou la position identifiés du franchissement du bord de récolte (118, 120) et le moment ou la position identifiés du début et/ou de la fin du ramassage du produit récolté, et
(f) correction de la carte de rendement à l'aide du retard ou du décalage dans l'espace identifié.

2. Procédé selon la revendication 1, la moissonneuse étant une moissonneuse-batteuse (10).

3. Procédé selon la revendication 1 ou 2, le retard étant dû à la durée écoulée du produit récolté entre le ramassage par un outil de récolte (18) et son arrivée au niveau du capteur (56, 62) et l'altération de la carte de rendement due à ce retard étant compensée à l'étape (f), de sorte que la carte de rendement générée à l'étape (f) contient les valeurs de capteur pour l'endroit respectif auquel la plante respective a été ramassée par la moissonneuse qui coopère avec le capteur (56, 62).

4. Procédé selon l'une des revendications 1 à 3, le retard ou le décalage dans l'espace étant déterminé forfaitairement pour la totalité du champ (100) ou séparément pour chaque trace (116) ou respectivement pour une partie des traces (116).

5. Procédé selon l'une des revendications 1 à 4, le début et/ou la fin du ramassage du produit récolté, à l'étape (d), étant reconnus à l'aide d'une modification des signaux du capteur (56, 62).

6. Procédé selon la revendication 5, le début et/ou la fin du ramassage du produit récolté, à l'étape (d), étant reconnus à l'aide d'un franchissement vers le haut ou le bas d'une limite par les signaux du capteur (56, 62).

7. Procédé selon l'une des revendications précédentes, le capteur (56, 62) détectant le débit et/ou l'humidité et/ou d'autres ingrédients du produit récolté.

8. Procédé selon l'une des revendications précédentes, celui-ci étant mis en œuvre pendant l'opération de récolte ou après.

9. Procédé selon l'une des revendications précédentes, celui-ci étant mis en œuvre par un dispositif informatique (58) de la moissonneuse ou un dispositif informatique espacé de celle-ci.

10. Arrangement pour la préparation assistée par ordinateur d'une carte de rendement électronique, dans laquelle les signaux générés par un ou plusieurs capteurs (56, 62) coopérant avec le produit récolté dans une moissonneuse lors de la moisson d'un champ (100) sont géoréférencés et enregistrés avec les indications de temps correspondantes, comprenant un dispositif informatique (58) qui est configuré pour mettre en œuvre un procédé selon l'une des revendications précédentes.
